# EUROPEAN PATENT APPLICATION

(11) **EP 1 052 420 A1**
(43) Date of publication of application: **15.11.2000**
(21) Application number: 00850077.9
(22) Date of filing: 05.05.2000
(51) Int. Cl.: F16D 1/09

(54) **Attachment means**

(30) Priority: 11.05.1999 SE 9901711
(71) Applicant: SKF MEKAN AB, S-641 21 Katrineholm (SE)
(72) Inventor: Östling, Sture, 641 25 Katrineholm (SE); Axelsson, Uno, 641 35 Katrineholm (SE)
(74) Representative: Westman, P. Börje I.

(57) **Abstract**

Attachment means for arresting a member (11) having a cylindrical bops (11a) on a shaft (10), and with an annular space (13) between said member and shaft, a pair of elements (15) having co-operating tapers inserted in the space and intended at mutual displacement to increase or reduce a clamping force between member and shaft, the elements comprise a first sleeve member (15a) with smooth inner surface enclosing the shaft (10), and a second sleeve member (15') with smooth outer surface for engaging the bore (11a) of the member (11), said second sleeve member (15') enclosing the first sleeve member (15a), whereby the first and second sleeve members (15a, 15') in their surfaces facing each other have saw-tooth-shaped axially tapering sections (15c, 15e), the second sleeve member (15') with one end edge abutting a stop (12) in the member (11), and the first sleeve member (15a) projecting outside the opposite end edge of the second sleeve member (15'), for being readily accessible for an external pushing force.

## Description

The present invention refers to an attachment means intended for arresting a member having a substantially cylindrical bore on a cylindrical shaft, and being of the kind defined in the preamble of claim 1.

Mounting of different, bore-provided machine members, such as fan wheels, belt pulleys and the like, on a cylindrical shaft, in such a manner that the machine member will not move circumferentially and/or axially relative to the shaft, can be effected in different manners. Thus it is common to use a keyway in the shaft and/or in the boss or hub of the machine member, and a key inserted in said keyway for preventing relative circumferential movement. However, such arresting requires a price increasing machining of the keyway in the shaft, it reduces the strength of the shaft and it furthermore can hardly be used together with light and inexpensive hollow shafts.

Similar limitations can be seen with use of thread joints, as this requires thread cutting of shaft and inner surface of the bore in the machine member.

Such mounting can also be effected using a tapering adapter sleeve, but that in turn requires that either the shaft or the bore of the machine member has a corresponding taper, which means increased manufacturing costs.

Cylindrical shaft and hub joints of course can also be obtained with press fit, effected with or without use of pressure oil arrangement, but also in this case it is difficult to use hollow shafts, due to large radially inward forces.

A clamping device highly eliminating the above drawbacks is earlier known. This device, named Ringfeder®, manufactured by Ringfeder GmbH, Krefeld, Germany, consists of pairs of ring members of short axial extension and having mating tapering surfaces, thus that a first closed ring member of the pair has a cylindrical bore intended to be arranged in contact with the envelope surface of the shaft, and a tapering surface on its opposite side. The second closed ring member of the pair has a cylindrical outer envelope surface intended to contact the cylindrical bore of the member to be attached to the shaft, whereas this second ring member has a bore taper substantially corresponding to that of the outer envelope surface of the first ring member. When the first ring member of the pair has been fitted on the shaft and the second ring member has been loosely fitted thereabout, and also loosely inside the bore of the machine member to be fitted, it is possible to achieve a good grip between the two ring members and via the intermediary of those ring members also between the shaft and the machine member, by pushing the second ring member axially along the external envelope surface of the first ring member, thereby gradually increasing the radial width of the two ring members. For further increasing the retaining force between shaft and machine member, the pairs of Ringfeder® rings then can be multiplied for achieving the desired grip. The first ring members of the consecutive pairs of ring members thereby are positioned with their adjacent gable faces engaging each other, and also the second ring member in the adjacent pair. The axial force required for mutually displacing the ring members is obtained by means of a flange ring, which is moved axially towards the machine member by being acted upon by screws tightened in threaded bores in the machine member.

Due to the fact that the pairs of ring members thus are not interconnected, there is always a risk for misalignment as the ring members are not centred. This means that the establishment of the grip between shaft and machine member might vary from one occasion to another, which of course is not desirable. The plurality of separate elements, i.e. a number of pairs of separate ring members furthermore makes stock-keeping and handling of these attachment means extensive and cumbersome.

The purpose of the present invention is to provide an attachment means, which in a simple and still efficient manner permits interconnection of a cylindrical shaft and a machine member having a cylindrical bore, without the necessity of machining the components to close tolerances, and without experiencing the drawbacks achieved with earlier solutions, such as discussed hereabove, and this has been obtained in that the attachment means according to the invention has been given the features defined in the accompanying claim 1.

Hereinafter, the invention will be further described and elucidated by way of a non-limiting embodiment shown in the accompanying drawings.
Fig. 1 shows in cross section a fan wheel attached to a shaft by means of the attachment means according to the invention.
Fig. 2 is a corresponding view showing a belt pulley attached to a shaft in a similar manner.
Fig. 3 is a detail in bigger scale showing a portion of the attachment means in mounted position.
Fig. 4 is a schematical cross section of the means, resembling to that of Fig. 3, and
Figs. 5 - 7 are separate fractional views of components incorporated in the means as shown in Fig. 4.

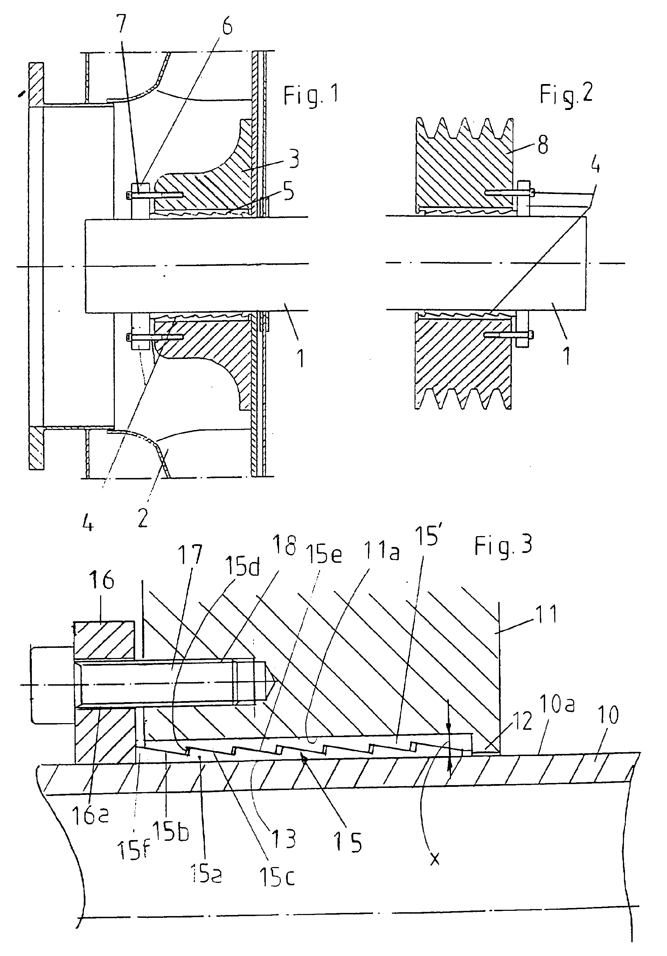

Fig. 1 shows a portion of a shaft 1 rotatably supported in bearings (not shown) and having affixed thereto adjacent its free end, a fan wheel 2, having a hub 3, which is connected to the shaft 1 by means of attachment means 4 in accordance with the present invention. This attachment means 4, which will be described more in detail in connection to Fig. 3, comprises a two-piece sleeve 5 and a ring 6, attached to the hub 3 via bolts 7. The joint will be strong enough to prevent the fan wheel from moving circumferentially as well as axially relative to the shaft 1, without any further components preventing such motions.

Fig. 2 shows in similar manner how a belt pulley 8 is fitted to a shaft 1, by means of an attachment means 4 similar to that illustrated in Fig. 1 and having the same associated components.

Fig. 3 shows in bigger scale and in cross section a portion of a hollow shaft 10 to which has been secured a machine member 11, shown only partially. As shown, the hollow shaft 10 has a cylindrical external envelope surface 10a, and the machine member 11 has an inner bore 1 la of cylindrical shape and having a diameter exceeding the outer diameter of the shaft. At one axial side of the bore in the machine member 11, there is however a shoulder 12 having only a slightly bigger diameter than the shaft, thereby leaving such a clearance only, that the machine member can be easily pushed up the shaft 10 to a desired arresting position. The annular space 13 formed between the inner surface 1 la of the bore in the machine member 11 and the outer envelope surface 10a of the shaft 10, has a certain radial dimension x. In this space is inserted the primary part of the attachment means according to the invention, i.e. the two-piece sleeve 15. This two-piece sleeve comprises a first or inner sleeve 15a having a cylindrical inner surface and an external surface provided with a continuous axial series of tapering, substantially saw-tooth-shaped surface elements, where a first element 15b tapers from a bigger diameter to a smaller diameter, followed by a consecutive surface element 15c, connected to the first element 15b, via a substantially radial wall member 15d thus that the end of section 15c adjacent the narrower end of section 15b has substantially the same outer diameter as that of section 15b at its biggest end, i.e. the end remote from the second section 15c. The second section 15c is related to and connected to the consecutive section 15e, etcetera, in the same manner as the relation between the first and second sections 15b and 15c. The second or outer piece 15' of the two-piece sleeve is designed as a reverse image of the first, inner sleeve piece 15a and has a cylindrical outer envelope surface, whereas its inner surface is provided with saw-tooth-shaped surface elements being complementary to those of the first sleeve piece 15a. The outer sleeve member 15' is arranged to enclose the inner sleeve 15a, with a short section 15f of the inner sleeve 15a projecting axially out from the interior of the second, outer sleeve 15'.

The attachment means also incorporates a ring member 16 arranged around the shaft 10 on the side of the machine member 11 facing away from its shoulder 12. This ring member 16 is provided with a number of axial through-holes 16a, each one receiving a bolt 17 projecting through the through-hole 16a and being screwed into corresponding threaded bores 18 in the machine member 11. This ring member 16 abuts the projecting sleeve portion 15f, and by tightening the bolt(s) 17, it is possible to make the inner sleeve 15a move axially relative to the outer sleeve 15', thereby causing the co-operating tapering surfaces of the inner and the outer sleeves 15a, 15' resp. to slide against each other, thereby first reaching the radial measure x of the space 13, and thereupon at continued tightening of the bolts, increasing the grip between the attachment means and the shaft 10 and between the attachment means and the interior of the machine member 11, until a firm grip is obtained in circumferential as well as in axial direction, and without the necessity of using keyslots, threads or the like. By the fact that the consecutive saw-tooth-shaped taper portions are made in an integral unit it is also achieved that the attachment means is centred in its seat without risks for misalignment, and furthermore the handling and stock-keeping of the attachment means is simplified as compared to the Ringfeder® system, as the large number of taper members of Ringfeder® have been reduced to only two sleeve-shaped members, which are furthermore delivered and handled as a single, held-together two-piece unit.

The sleeve members e.g. 15a and 15' are preferably manufactured in such a manner that a steel belt is treated in a rolling mill thus that one side face thereof is provided with the saw-tooth-shaped pattern extending in the longitudinal direction of the belt. Two lengths of appropriate dimensions thereupon are severed from the steel belt, whereupon these two lengths are positioned with the saw-tooth profiles facing and abutting each other, and being positioned displaced relative to each other so much as to obtain a portion projecting outside the other (for thereby forming the projecting sleeve portion 15f). Finally the two lengths of the steel belt positioned in such a manner relative to each other are subjected to a rolling operation forming them to a substantially cylindrical outer and inner form. At least one but preferably both sleeve members 15a, 15' thus shaped have a transverse slot (not shown in the drawings), contributing to the radial expansion when the two sleeve members are pushed together, and due to this manufacturing operation the two sleeve members are held together as a unit, which can not be dismounted without disforming the unit.

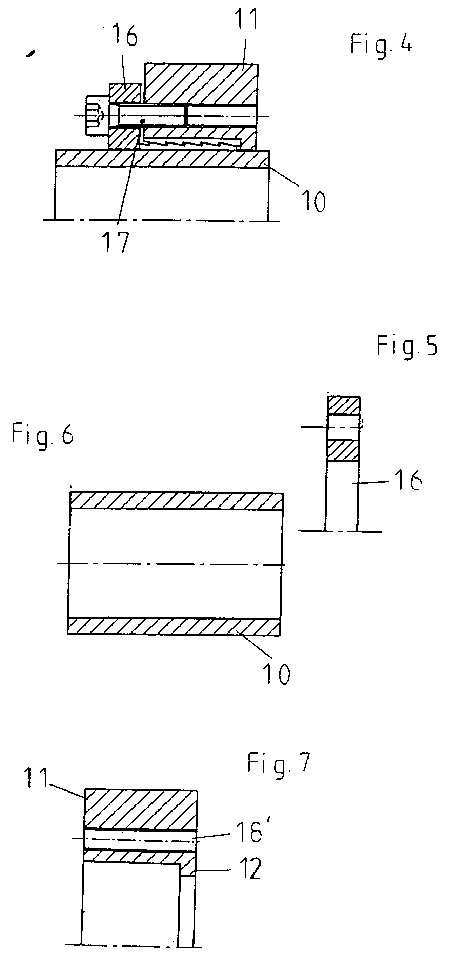

In Fig. 4 is shown in cross section substantially corresponding to Fig. 3, a hollow shaft 10, a machine member 11 and an attachment means according to the invention. The main difference as compared to the embodiment of Fig. 3 is that the threaded bore 18' in the machine member 11 is a through-hole.

The simplicity of the components forming part of the joint is well illustrated in Figs. 5 to 7, showing the ring member 16, the hollow shaft 10 and the machine member 11. It is understood that none of these components require complicated manufacturing operations and the requirements for close tolerances are modest.

The invention is not limited to the embodiments shown in the drawings and described in connection thereto, but modifications and variants are possible within the scope of the appended claims.

## Claims

1. An attachment means intended for arresting a machine member (3, 8, 11) having a substantially cylindrical bore (11a) on a cylindrical shaft (1, 10), wherein the bore has a larger inner diameter than the outer diameter of the shaft, resulting in an annular space (13) between said machine member and the shaft, in which space is inserted a pair of elements (5, 15) having mating, co-operating taper surfaces facing each other, said elements being intended at mutual displacement to change their overall radial size, thereby increasing or reducing a clamping force between the machine member and the shaft,
**characterized therein**,
that the elements is a first thin-walled sleeve member (15a) having a smooth inner surface arranged to enclose a portion of the shaft (10), and a second, thin-walled sleeve member (15') having a smooth outer surface arranged to engage the bore (11a) of the machine member (11), said second sleeve member (15') enclosing the first sleeve member (15a),
that the first and second sleeve members (15a, 15') in their surfaces facing each other have a plurality of saw-tooth-shaped consecutive axially tapering sections (15c, 15e), that the second sleeve member (15') with one of its end edges abuts against a stop (12) provided in the machine member (11), and
that the first sleeve member (15a) projects outside the opposite end edge of the second sleeve member (15'), for being readily accessible for an external pushing force causing such mutual displacement between the first and second sleeve members (15a,15').

2. An attachment means as claimed in claim 1,
**characterized therein**,
that at least one of the first and the second sleeve members (15a, 15') is provided with a slot, extending mainly in axial direction.

3. An attachment means as claimed in claim 1 or 2,
**characterized therein**,
that the first and second sleeve members (15a, 15') form a held-together unit (15).

4. An attachment means as claimed in anyone of the preceeding claims,
**characterized therein**,
that the first and second sleeve members (15, 15') comprise longitudinal belt-shaped elements, provided with the saw-tooth-shaped tapering surface portions (15c, 15e) via a rolling operation or the like, and which in a rolling operation are formed to a sleeve unit (15) comprising the two sleeve members as a held-together unit.

5. An attachment means as claimed in anyone of the preceeding claims,
**characterized therein**,
that a ring member (6, 16) is provided about the shaft (1, 10) in abutting engagement with the end edge of the first sleeve member (15a) projecting outside the second sleeve member (15'), said ring member (6, 16) being movable towards the machine member (11) with a force sufficient for causing such mutual displacement between the first and second sleeve member.

6. An attachment means as claimed in claim 5,
**characterized therein**,
that the ring member (6, 16) is movable by means of at least one bolt (7, 17) extending with its shank through a bore (16a) in the ring member (16) and tightenable in a threaded bore (18) in the machine member (11).
